# EUROPEAN PATENT APPLICATION

(11) **EP 1 510 844 A1**
(43) Date of publication of application: **02.03.2005**
(21) Application number: 03020107.3
(22) Date of filing: 04.09.2003
(51) Int. Cl.: G02B 6/44

(54) **An optical fibre connector with electromagnetic shielding**

(30) Priority: 28.08.2003 US 498526 P
(71) Applicant: SIEMENS AKTIENGESELLSCHAFT, 80333 München (DE)
(72) Inventor: Cole, Guy A., 33489 Boca Raton, FL (US); Croone, Arthur James, 33435 Boyton Beach, FL (US); Edwards, Earl, 33487 Lakeworth, FL (US); Harlan, Don D., 33414 Wallington, FL (US)

(57) **Abstract**

The present invention relates to optical connectors for use in modules and the like where electromagnetic interference is an issue.

The present invention provides a connector housing (30) comprising several side walls (40,42) and a front plate (31). The housing provides containment of electromagnetic emission from within a module such that electromagnetic interference does not emanate from the fibre-optic interface of a connection housing of module or the like. The front plate of the housing also comprises several apertures communicating with fibre terminals (32) for receiving optical fibres (45). The terminal housings are tilted towards the normal on the front plate.

## Description

### Field of the invention

The present invention relates to optical connectors and, in particular, relates to optical connector assemblies for the placement of the same within modules and rack cards.

### Background

It is well known that, in many electrical and electronic systems, due regard must be given to the shielding of components from electromagnetic interference (EMI). In optoelectronic systems, despite the apparent ruggedness of optical signals with respect to an EMI, EMI considerations need to be taken into account because of the electronics associated with the transmission and detection of light signals. For example, high speed synchronous optical network transport nodes are made up of many high speed electro-optical modules having electronic components operating at frequencies between 2.5 and 10 GHz or more. Each module will contain at least one printed circuit board (PCB). Each PCB is individually housed in a sealed enclosure thereby forming an EMI contain module. An electrically conductive bulkhead will extend from the front of each module and provide a shield for the module at the front, an enable the module to be secured to the shelf. Furthermore, third order non-linear effects can affect the performance of not only the active components but also on the passive components. These considerations apply to other optical communications schemes.

Network equipment building system (NEBs) criteria levels have been drafting by Bellcore and other interested industry bodies to provide a voluntary standard for industry players whereby to determine the minimum EMI criteria and physical properties of components and systems for networks. In particular NEBS3 determines certain electromagnetic compatibility levels and fire resistant requirements.

NEBS3 electromagnetic compatibility requires telecommunications equipment to pass an open door emissions test with stringent limits. Most systems radiate sufficient electromagnetic energy to fail this test unless steps are taken to shield and ground the radiated energy. The level of required shielding will vary greatly depending on many variables of which aperture size (unshielded areas) and radiated frequency are two of the most significant. The ability of the design to minimise aperture size for plastic optical connectors is not easily accomplished especially when consideration is given to providing other features such as modularity, multiple choices for connector type and maintaining dense packaging and the like. Different systems have been designed for the NEBS3 requirements but provide no protective enclosure at the circuit pack level. Accordingly, NEBS3 open door electromagnetic compatibility testing has not addressed such requirements and relatively large unshielded areas that reduce EMI shielding effectiveness have not been constructed to enable modularity readily allow a variety of connector choices or allow easy access for servicing and maintenance of the optical fibre elements.

In electronic fields, printed circuit boards - each carrying electronic components and sometimes referred to as circuit packs, are mounted within shelves for connection at rear edges of the boards to other circuit boards called back plates. For this purpose, the backs are slideable into and out of fronts of the shelves in this manner.

Circuit packs must be shielded from external EMI forces and also to protect outside equipment and other circuit packs and components from EMI generated by each of the packs themselves need to be controlled. Accordingly, circuit packs are conventionally housed within EMI shields which are in the form of shielded housing surrounding the packs whereby to form electronic modules. It has been found convenient, where EMI conditions allow, for two or more circuit packs to be retained within the same shielded housing. This shielded housing is then inserted into a receiving station within an electrical connection of the one or more circuit packs to the back plate.

In view of the trend for miniaturisation of components, there is a need for compact enclosures which optical fibre connectors securely and prevent stray electronic EMI emissions.

### Object of the Invention

The present invention seeks to provide a compact enclosure for an optical connector. The present invention also seeks to provide an optical connector enclosure which is operable to shield fibre optic connectors from electromagnetic interference.

### Statement of Invention

In accordance with a first aspect of the invention there is provided the fibre optic connector arrangement to an electromagnetic interferance (EMI) shielded enclosure, wherein the EMI shielded enclosure has a front cover wherein the fibre optic connector comprises at least one fibre optic terminal and wherein the fibre optic terminal has an axis to accept an input fibre optic cable along such axis, wherein the axis of these fibre optic terminals is between 15 and 75° to a normal with the front cover, wherein the EMI enclosure provides an output port through which fibre optic pigtails can exit the enclosure.

Where there are a number of terminals, each terminal is preferably arranged such that the terminal connectors arranged closely spaced together to maximise the use of internal space within the EMI shielded enclosure. Conveniently, the front cover of the enclosure has apertures operable to accept standard fibre optic terminals with or without specific adaptors. Conveniently, the EMI shielded enclosure comprises a general rhomboid configuration whereby the optical connectors have an axis which is generally parallel with the sides of the rhomboid configuration. Conveniently, the rhomboid may be truncated whereby to provide an output passage for optic fibre without causing fibres therein to bend beyond specified limits. A generally cylindrical piece surrounding the fibres beyond the output aperture may be attached to this truncated section whereby to afford greater electromagnetic emission control.

A face plate of the enclosure may be integrally fabricated with the face plate of a module the enclosure of a generally rectilinear or rhomboid shape with sides of the enclosure being cut by side front and rear side plates. Alternatively, the enclosure may be provided by two clam-like shells. In this case any particular components will be of conductive material and a conductive gasket will be applied between any two components.

### Brief Description of the Figures

For a better understanding of the invention and to show how the same may be carried into a fact, there will now be described, by way of example only, specific embodiments according to the present invention with reference to the accompanying figures as shown in the accompanying drawing sheets, wherein:
Figure 1 shows a perspective view of a multi module rack system;
Figure 2 shows a cut away rack system with one module;
Figure 3 shows a general view of an embodiment of the present invention;
Figure 4 shows embodiment shown in figure 3 with a side cover removed;
Figure 5 shows an embodiment of the present invention with the components thereof in a spaced apart relationship; and
Figures 6a and 6b show a second embodiment of the invention.

### Detailed Description of the Invention

There will now be described, by way of example, the best mode contemplated by the inventor for carrying out the invention. In the following description numerous specific details are set forth in order to provide a thorough understanding of the present invention. It will be apparent, however, to one skilled in the art, that the present invention may be practised without using the specific details. In other instances well known methods and structures have not described in detail so as not to obscure the present invention unnecessarily.

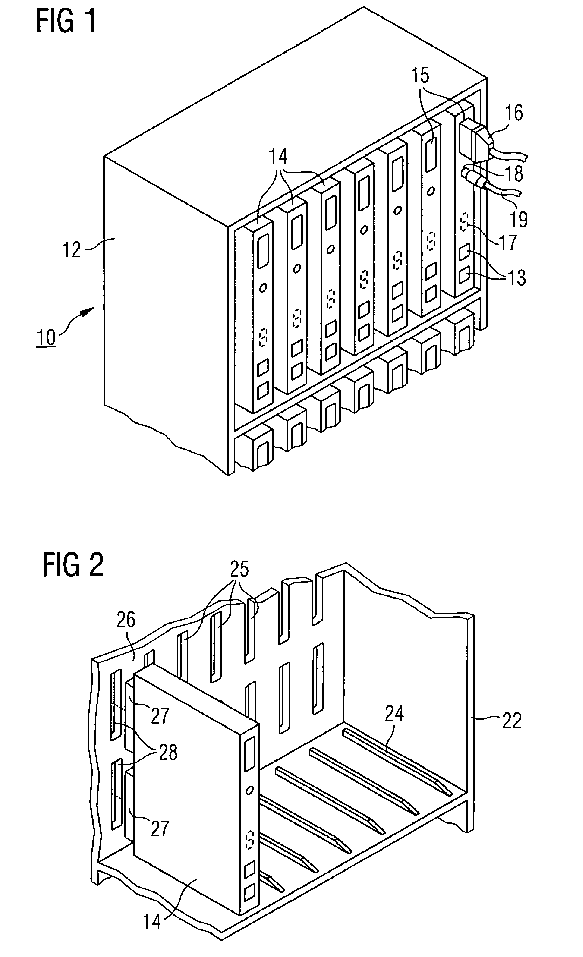

Referring now to figure 1 there is shown a multi module rack system 10 comprising an external cabinet 12 having modules 14 located in sub enclosures. On the face of each module there are shown switches 13, electrical cable connectors 15 attached to a cable terminator 16, indicator light 17 and fibre optic cable connectors 18 attached to fibre terminator 19 at the end of a fiber. In typical installations there will be provided EMI shielding, for example, by the provision of sealant between and/or very tight fitting modules to ensure that any electromagnetic emissions inadvertently straying from a module or associated with a connector do not interfere with any one or more other components.

Figure 2 shows a cut away cabinet 22 with tracks 24 and associated connectors 25 fixed upon a back plane 26. The cabinet has a single module 14 upon its associated track (not visible). The connectors of the module 27 are spaced from corresponding back plane connectors 28.

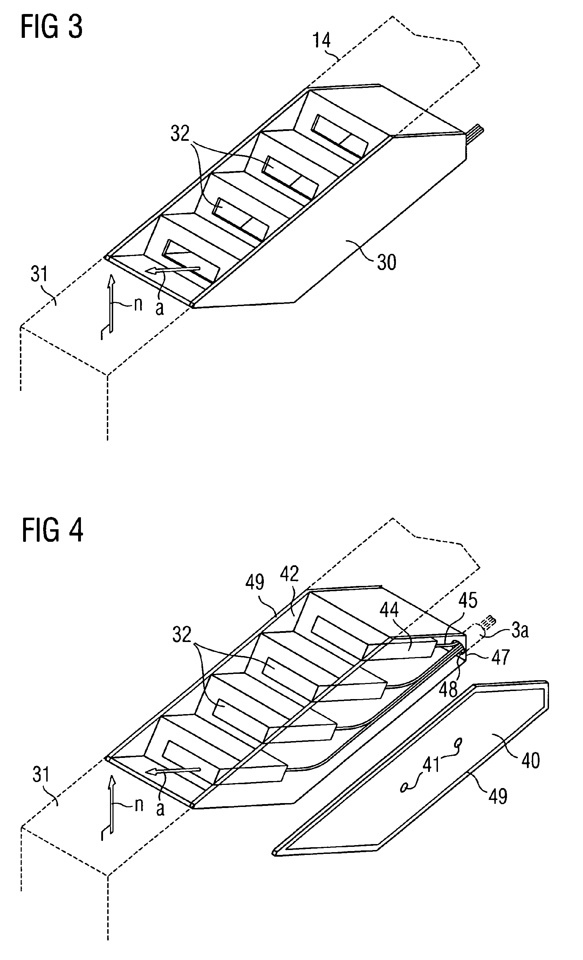

Referring now to figure 3, there is shown a first optical connector housing 30 in accordance with the invention situated in a face plate 31 of a module 14 indicated in dotted lines. Optical cable terminators 32 are shown with an axis, a, of each of the connectors being inclined with respect to a normal, n, of the face plate. The housing is shown as a generally rhombic arrangement whereby fibre tails (or pigtails, see figure 4, below) may lie in a generally parallel and closely spaced apart arrangement, especially compared with conventional connectors arranged such that they have an axis parallel with a normal associated with a face plate. The face of the housing 30 is generally stepped whereby the optical terminator 32 maximises the use of available space. It is to be appreciated the terminator 32 could protrude outwardly whereby to further maximise the use of space within the module.

Figure 4 shows the optical connector housing with one of the side covers 40, 42 removed. The terminator 32 have a body 44 extending from the front (face plate) and from which fibre tails 45 extend. The generally rhomboid structure 43 is truncated at 47, where the fibre tails exit the housing/enclosure at aperture 48. It is possible to have a metallic grounding cylinder 39 extending from the housing to further reduce the propagation of stray electromagnetic emissions from the enclosure. Preferably conductive foam or similar material is arranged about the fibres to achieve the same effect.

The optical connector housing is also arranged to prevent emissions from inside the module radiating to the exterior of the module by the use of conductive gaskets 49 between the contacting edges of the rhomboid section 43 and the top edge of the face plate, indicated in outline by reference numeral 31. Conveniently, the side plates 40, 42 have depressions to assist in the location of the gasket 49 and to add strength. Apertures 41 are positioned to enable a screw threaded retaining means or similar conductive fastening member to allow the side plates to abut the rhomboid section 43. Tabs (not shown) placed on the face plate may employed to ensure, upon fitment of the side plates, that the shields provide a sufficient biasing force against the gaskets towards the face plates.

In the implementation of the invention, the optical housing connector 30 is mounted to a module face plate and has connector adaptors that are mounted to the fibre optic connector housing. The connector adaptors can be of various types such as LC, SL, FC, DIN or E2000, dependent upon custom need and/or applicable standard. Note that the face plate of the module could be an integral cast part of the face plate of the enclosure. The fibre optic connectors for the circuit pack (referred to as an optical fibre pigtails) are subsequently plugged into the body of the connector adaptors. The rhomboid/side plate enclosure is then fixed to the face plate with the side plates fastened thereto. The enclosure, once assembled, with the conductive gaskets installed and the pigtail through the aperture 48 then provides a high level of EMI shielding effectiveness and fire resistance. The conductive gaskets are compressed after fastening the side plates to rhomboid section and effective form an aperture free low resistance ground path. Preferably there is an overlap of at least 5mm between component parts of the module to help ensure such EMC control and, further, provide a good degree of strength. Dimpling (not shown) formed in the side shields can assist in maintenance of the fastening hardware within the width of the face plate. It will be appreciated that assembly of the enclosure in this fashion enables the fibre to be inspected before enclosing the same.

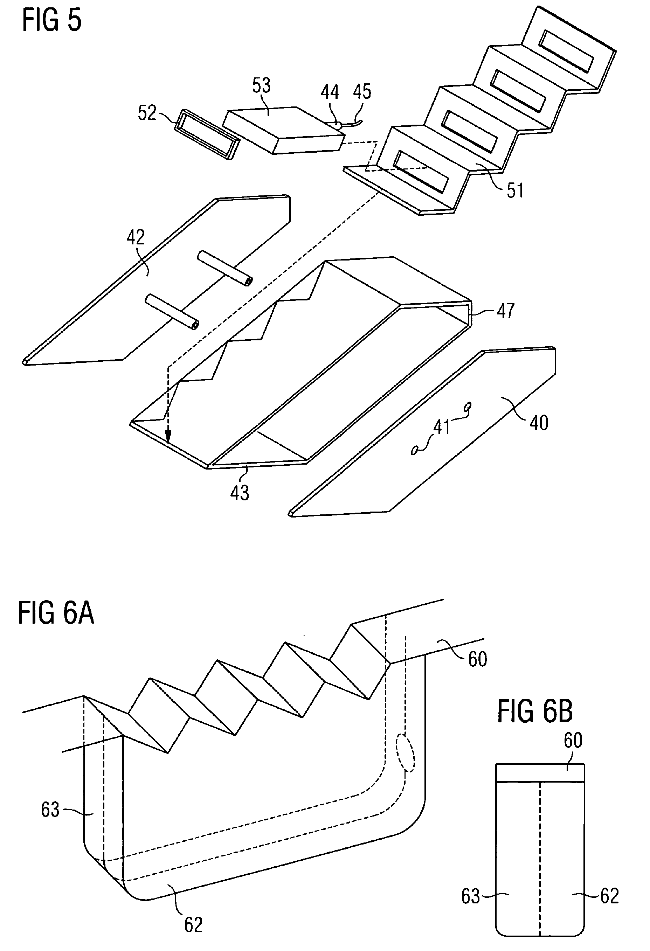

Referring to figure 5 there is shown a simplified view of the basic components sides 40, 42 are shown on respective sides of rhomboid enclosure. Reference numeral 51 denotes fibre optic panel into which for example purposes only, an LC adaptor 52 snaps to fit. In turn, LC connector adaptor 53 snaps to adaptor 52. It will be appreciated that the generally rhomboid side profile is not mandatory, but reduces wasted space in oftentimes very small enclosures.

Figure 6 shows a further embodiment wherein the enclosure comprises a face plate and two interlocking side shells. A conductive seal is provided (not shown between part 62, 63 and 60) and a further conductive seal between part 62 and 63. The enclosure face plate may comprise a part of the face plate of the module. The enclosure comprises a generally rectilinear enclosure but this is only exemplary of several possible configurations. Of course a further embodiment could comprise a first tin like element with a second lid element whereby to provide a two component fibre optic terminal enclosure.

Should there be a requirement to service or upgrade the optical fibres, the assembly process is reversed. The side shields are removed by unfastening the screws and any further parts can be detached.

The present invention thus provides modularity - the housing may be half the thickness of the rack modules and may be placed in parallel as well as, possibility, in tandem. The invention provides, by the use of fibre optic terminals disposed at an angle between 15 and 75° to the face plate whereby the connectors may be placed more closely together, making greater use of the limited space available within a module. It is anticipated that a 45° angle will most likely be employed for typical situations, but reasonable variations will be employed to enable the most efficient use of space in any particular configuration. The depth of the enclosure is much reduced relative to what is known and the closer packing of the optical terminal bodies (where there are more than one optical terminal) enable high density, tightly pitched circuit packs to be employed sensitors thin and not significant larger than a normal space occupied by connectors and fibre. The invention has been designed to be suitable for 57 and 27.5mm pitch circuit packs (although in practice, smaller pitch circuit packs are possible). Due to its modular construction and attachment, the present invention is compatible with a wide variety of face plate manufacturing methods including extrusion machining, welding etc. Of course, the fibre optic terminators may be male or female with respect to any fibre optic cable input to the module. The integration of optical connector mounting with custom modular metal enclosure provides a high degree of electromagnetic shielding effectiveness, fire resistance, and option fibre routing control, while maintaining a flexible and easy accessed optical interface.

## Claims

1. A fibre optic connector arrangement to an electromagnetic interference (EMI) shielded enclosure wherein the EMI shielded enclosure has a front cover/face plate wherein the fibre optic connector comprises at least one fibre optic terminal and wherein the fibre optic terminal has an axis and is porable to accept an input fibre optic cable along such axis, wherein the axis of this terminal lies between 15 and 75° to a normal associated with the front cover/face plate, and:
wherein the EMI enclosure provides an output port through which fibre optic pigtails can exit the enclosure.

2. An arrangement according to claim 1 wherein there are a plurality of terminals, each arranged such that the terminal connectors are arranged closely spaced together whereby to maximise the use of space within the enclosure.

3. An arrangement according to claim 1 wherein in the front cover of the enclosure has apertures operable to accept standard fibre optic connectors with or without specific adaptors.

4. An arrangement according to claim 1 wherein the EMI shielded enclosure comprises a generally rhomboid configuration whereby the optical connectors have an axis which is generally parallel with two of the sides of the rhomboids.

5. An arrangement according to claim 1 wherein the EMI shielded enclosure comprises a generally rectilinear configuration.

6. An arrangement according to claim 1 wherein the face plate of the enclosure is integrally formed with a face plate of an associated module and to which component parts of the enclosure are attached.

7. An arrangement according to claim 1 wherein the face plate of the enclosure is integrally formed with a face plate of an associated module and to which other component parts of the enclosure are attached.

8. An arrangement according to claim 1 wherein the face plate of the enclosure is integrally formed with a face plate of an associated module wherein the enclosure further comprises two corresponding shell like elements which together with the face plate provide EMI control.
